# FASCICULE DE BREVET EUROPEEN

(11) **EP 0 756 242 B1**
(45) Date de publication et mention de la délivrance du brevet: **12.12.2001**
(21) Numéro de dépôt: 96401658.8
(22) Date de dépôt: 25.07.1996
(51) Int. Cl.: G06K 7/06

(54) **Agencement pour le raccordement d'une carte à circuit(s) intégré(s) à contact dans un dispositif de lecture-écriture et capot appartenant à un tel agencement**
Anordnung zur Verbindung einer Chipkarte mit Kontakten in einer Lese- und Schreibvorrichtung und zugehörige Kappe
Connection arrangement for a smart card with contacts in a read/write device and cap for this arrangement

(30) Priorité: 28.07.1995 FR 9509207
(43) Date de publication de la demande: 29.01.1997
(73) Titulaire: ITT INDUSTRIES, 39100 Dole (FR)
(72) Inventeur: Bricaud, Hervé, 39100 Dole (FR); Pizard, Yves, 39100 Dole (FR)
(74) Mandataire: Kohn, Philippe

(56) Documents cités:
- EP-A- 0 231 409
- EP-A- 0 366 513
- FR-A- 2 492 213
- FR-A- 2 607 291

## Description

La présente invention concerne un agencement pour le raccordement d'une carte à circuit(s) intégré(s) à contact dans un dispositif de lecture-écriture.

L'invention concerne plus particulièrement un agencement dans lequel la carte est introduite selon une direction sensiblement parallèle aux plages conductrices de la carte, du type comportant un connecteur électrique fixé sur un support du dispositif, notamment sur une carte à circuit imprimé, et dont une face plane supérieure de contact porte des éléments de contact destinés à coopérer avec les plages de la carte lorsque cette dernière est en position de lecture-écriture.

Afin d'assurer le guidage de la carte lors de son introduction, et en vue d'un positionnement correct de la carte par rapport au connecteur, un tel agencement doit comporter notamment des moyens de guidage et de positionnement de la carte par rapport au connecteur.

Selon une conception la plus répandue, le connecteur.et au moins une partie des moyens de guidage et de positionnement sont réalisés sous la forme d'un élément unique, par exemple par moulage en matière plastique, et c'est cet élément qui est fixé sur le support, l'opération de montage consistant à raccorder électriquement des éléments de contact du connecteur à des pistes correspondantes de la carte de circuit imprimé, ainsi qu'à fixer l'élément en l'accrochant sur le support, par exemple par des moyens à emboîtement élastique.

Selon une nouvelle conception, le connecteur proprement dit est réalisé sous la forme d'un composant discret de très petites dimensions qui est mis en place sur une carte à circuit imprimé, de la même manière que les autres composants électroniques appartenant aux différents circuits du dispositif de lecture-écriture, par exemple selon la technique du report plat et du "pick and place".

Le connecteur ne comporte plus alors pour l'essentiel qu'un corps en matière plastique isolante qui porte les éléments de contact et/ou un commutateur de détection de présence de la carte, en l'absence de tout moyen de guidage de la carte par rapport au connecteur.

Cette technique d'assemblage permet de monter le connecteur et de le fixer par brasage de ses bornes de raccordement, comme les autres composants électroniques montés sur la carte, de procéder au contrôle et aux éventuelles réparation.

La carte à circuit imprimé qui porte le connecteur est ensuite montée dans le dispositif de lecture-écriture dont d'autres composants mécaniques comportent des moyens de guidage et de positionnement de la carte lors de son introduction dans le dispositif de lecture-écriture.

Une telle conception est avantageuse en ce qu'elle permet d'assurer le montage et la fixation du connecteur dé la même manière que pour les autres composants, mais elle aboutit à des difficultés de positionnement relatif des moyens de guidage de la carte par rapport au connecteur aboutissant notamment à des difficultés d'introduction de la carte dans le dispositif de lecture-écriture, le bord transversal avant de la carte risquant de buter contre un bord transversal en vis-à-vis du corps en matière plastique du connecteur.

Il est également souhaitable de réduire la chaîne de cotes dimensionnelles par rapport aux moyens de guidage de l'équipement afin d'éviter une trop grande accumulation de tolérances de fabrication et de montage.

La présente invention a pour but de proposer un nouvel agencement du type mentionné précédemment qui remédie à ces inconvénients.

Dans ce but, l'invention propose un agencement tel que défini à la revendication 1.

Selon cette conception, le connecteur est traité comme un composant électronique fixé et raccordé sur la carte à circuit imprimé, tandis que le capot est une pièce mécanique rapportée au-dessus du connecteur lors d'opérations d'assemblage mécanique de composants et dont le positionnement relatif par rapport au connecteur est assuré par l'intermédiaire de la carte à circuit imprimé. sur laquelle le connecteur et le capot sont positionnés et fixés indépendamment.

La mise en place du capot est ainsi effectuée à un poste d'assemblage indépendant des postes liés au report à plat des composants électroniques, les opérations pouvant alors être effectués en des lieux géographiques éloignés.

Selon d'autres caractéristiques de l'invention :
- le capot comporte un. plancher de guidage de la carte dont la face supérieure s'étend sensiblement en affleurement avec la face supérieure de contact du connecteur ;
- le capot comporte deux glissières latérales de guidage de la carte qui s'étendent depuis une extrémité avant du capot qui délimite une fente d'introduction de la carte ;
- la fente d'introduction est délimitée en partie par un plancher de guidage ;
- le plancher de guidage se termine par un bord transversal arrière qui chevauche au moins en partie une portion en vis-à-vis du connecteur ;
- cette portion du connecteur est une patte transversale qui, lors de la mise en place du capot sur le support préalablement équipé du connecteur, est emboîtée élastiquement dans un logement délimité par le bord transversal arrière du plancher et par un bec en vis-à-vis du capot ;
- le capot comporte un plafond qui s'étend au moins en partie au-dessus du connecteur ;
- le capot comporte des moyens pour sa fixation par emboîtement élastique sur le support ;
- le capot comporte des pieds de fixation dont chacun comporte à son extrémité libre un crochet reçu dans un trou complémentaire du support.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique en perspective éclatée qui illustre un agencement réalisé conformément aux enseignements de l'invention avec un capot de guidage disposé au-dessus d'un connecteur monté sur une face d'un circuit imprimé ;
- la figure 2 est une vue de dessus du capot de la figure 1 ;
- la figure 3 est une vue en section selon la ligne 3-3 de la figure 2 ;
- la figure 4 est une vue selon la flèche F4 de la figure 2;
- la figure 5 est une vue de détail en section selon la ligne 5-5 de la figure 2 qui illustre l'accrochage du capot sur une carte à circuit imprimé ;
- la figure 6 est une vue de dessous du capot de la figure 2 ;
- la figure 7 est une vue en section selon la ligne 7-7 de la figure 6 ;
- la figure 8 est une vue similaire à celle de la figure 3 sur laquelle on a illustré le capot en position au-dessus d'un connecteur ;
- les figures 9 et 10 sont des vues similaires à celles des figures 4 et 6 qui illustrent le capot en association avec le connecteur ;
- la figure 11 est une vue similaire à celle de la figure 7 qui représente, à plus grande échelle, le capot et le connecteur en position montée sur une carte à circuit imprimé ;
- la figure 12 est une vue de détail selon la flèche F12 de la figure 6 ; et
- la figure 13 est une vue similaire à celle de la figure 11 qui illustre une variante de réalisation du connecteur.

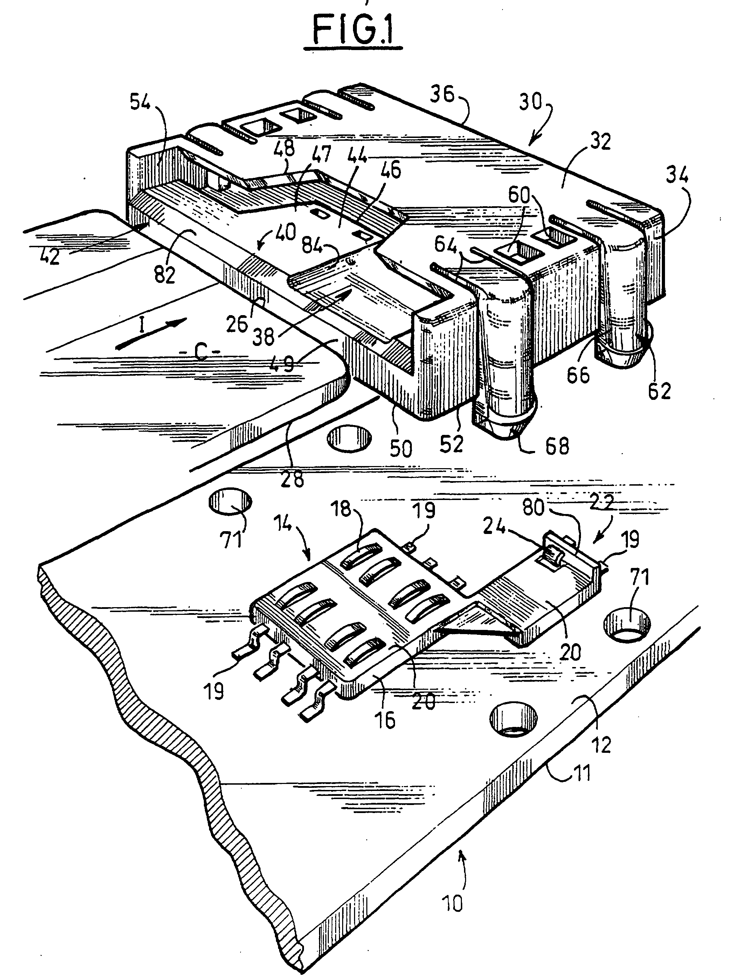

On a représenté sur la figure 1 une carte à circuit imprimé 10 appartenant à un dispositif de lecture-écriture.

La carte 10 comporte une face supérieure 12 sur laquelle est monté, par exemple selon la technique du report à plat des composants, un connecteur 14 pour le raccordement d'une carte à circuit(s) intégré(s) à contact C.

Selon une conception connue, qui est par exemple décrite et représentée dans le document WO-A-95/18421, le connecteur 14 est constitué pour l'essentiel par un corps 16 en matière plastique isolante qui porte une série d'éléments de contact électrique 18 réalisés sous la forme de lames conductrices qui font saillie au-delà de la face supérieure de contact 20 du corps 16.

Le connecteur 14 peut également comporter, de manière intégrée, un commutateur 22 pour la détection de la présence d'une carte C en position de lecture-écriture qui comporte notamment un levier de commande 24 avec lequel coopère le bord transversal avant 26 de la carte C, puis la face inférieure de la carte.

Le connecteur est fixé sur la carte 10, par exemple, par brasage des pattes 19 des éléments 18. Le positionnement précis du connecteur peut être assuré par des pions (non représentés) du connecteur qui sont reçus dans des trous de la plaque 10.

La face inférieure 28 de la carte C comporte, selon une conception connue, une série de plages conductrices (non représentées) qui, en position de lecture-écriture, coopèrent avec les lames conductrices 18 du connecteur 14.

Conformément aux enseignements de l'invention, le guidage de la carte C par rapport au connecteur 14 est assuré par l'intermédiaire d'un capot 30 qui est une pièce réalisée par moulage en matière plastique.

Le capot 30 est constitué pour l'essentiel par une face supérieure, ou plafond, 32 par deux parois latérales parallèles et verticales 34 et par un fond transversal arrière 36.

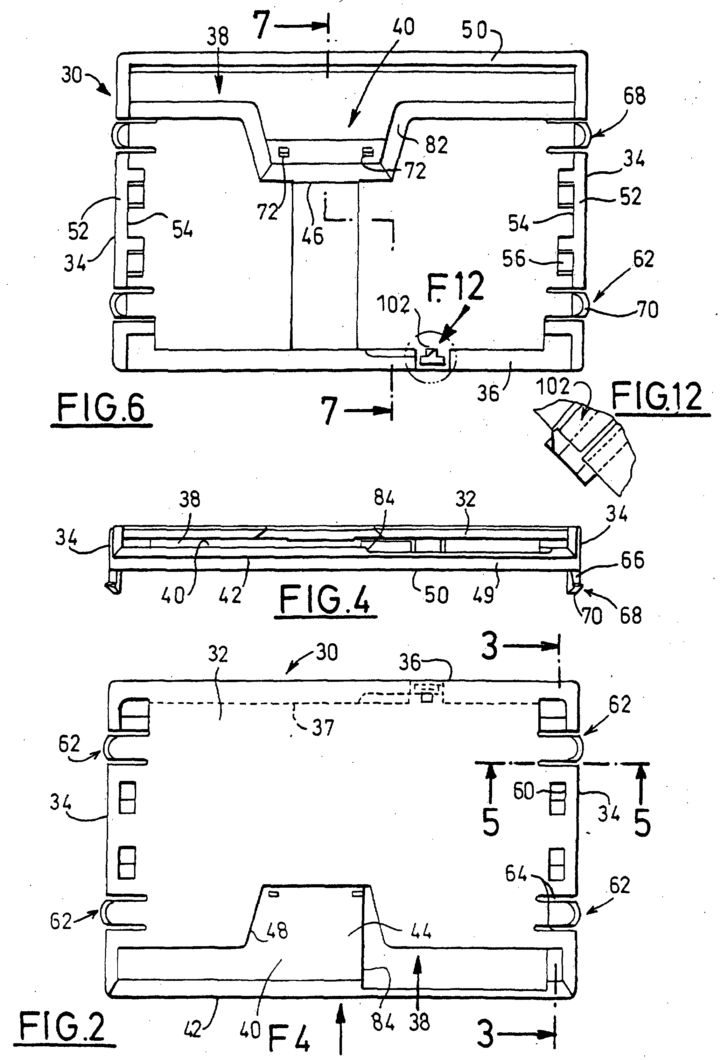

Comme on peut le voir en détails aux figures 2 à 7, les parois latérales 34 et le plafond 32 délimitent une fente 38 d'introduction et de guidage de la carte C qui est également délimitée verticalement vers le bas par un plancher 40 du capot 30 qui s'étend parallèlement au plafond 32.

Le plancher 40 s'étend longitudinalement depuis la face avant ouverte 42 du capot 30.

Le plancher 40 ne s'étend longitudinalement que partiellement, et notamment par une partie centrale 44 de largeur transversale réduite qui se termine par un bord transversal arrière 46.

Afin de permettre la réalisation par moulage en une seule pièce du capot 30, le plafond 32 comporte à l'avant une découpe 48 de contour sensiblement complémentaire de celle du plancher 40, 44, cette découpe permettant le passage d'un noyau dans l'outil de moulage du capot 30.

Le bord avant 49 du plancher 40 délimite un bord transversal inférieur 50 qui s'étend dans le même plan que les bords inférieurs 52 des parois latérales 34, les bords 50 et 52 étant prévus pour prendre appui sur la face supérieure 12 de la carte à circuit imprimé 10 lorsque le capot est fixé en position sur cette dernière.

Comme on peut le voir notamment aux figures 3, 6 et 7, les faces internes et parallèles 54 des parois latérales 34 comportent des parties complémentaires en relief 56 et 58 qui constituent des glissières pour le guidage des bords latéraux de la carte C parallèles à sa direction d'introduction I.

Le plafond 32 comporte des découpes 60 permettant de réaliser par moulage les parties 56 des glissières de guidage.

Afin d'assurer la fixation du capot 30 sur la carte à circuit imprimé 10, celui-ci comporte des moyens de fixation par accrochage qui, dans l'exemple illustré sur les figures, sont constitués par deux paires de pieds 62 agencés dans les parois latérales 34.

Chaque pied 62 est délimité par deux fentes parallèles 64 pour pouvoir se déformer élastiquement et se présente sous la forme d'une patte verticale 66 de section semi-cylindrique qui s'étend verticalement au-delà du bord inférieur 52 de chaque paroi latérale 34 pour se terminer par une extrémité libre en forme de crochet 68.

Comme on peut le voir sur la figure 5, la longueur de la patte 66 est telle que, en position fixée, le crochet 68 s'étend en regard de la face inférieure 11 de la carte à circuit imprimé 10.

Pour faciliter l'introduction des crochets 62 dans des trous 71 de la carte 10, chaque crochet 68 comporte un chanfrein 70.

Ainsi, le montage et la fixation du capot 30 sur la carte à circuit imprimé 10 s'effectue par introduction des crochets 62 dans les trous 71, puis en exerçant une pression verticale sur le capot 30 jusqu'à emboîtement élastique des extrémités. libres formant crochets 68.

Au voisinage de son bord arrière 46, la partie centrale 44 du plancher 40 comporte, sous sa face inférieure 45, deux pattes formant crochets 72 qui délimitent un logement 74 destiné, comme cela sera expliqué par la suite, à recevoir une portion complémentaire 75 du corps 16 du connecteur 14.

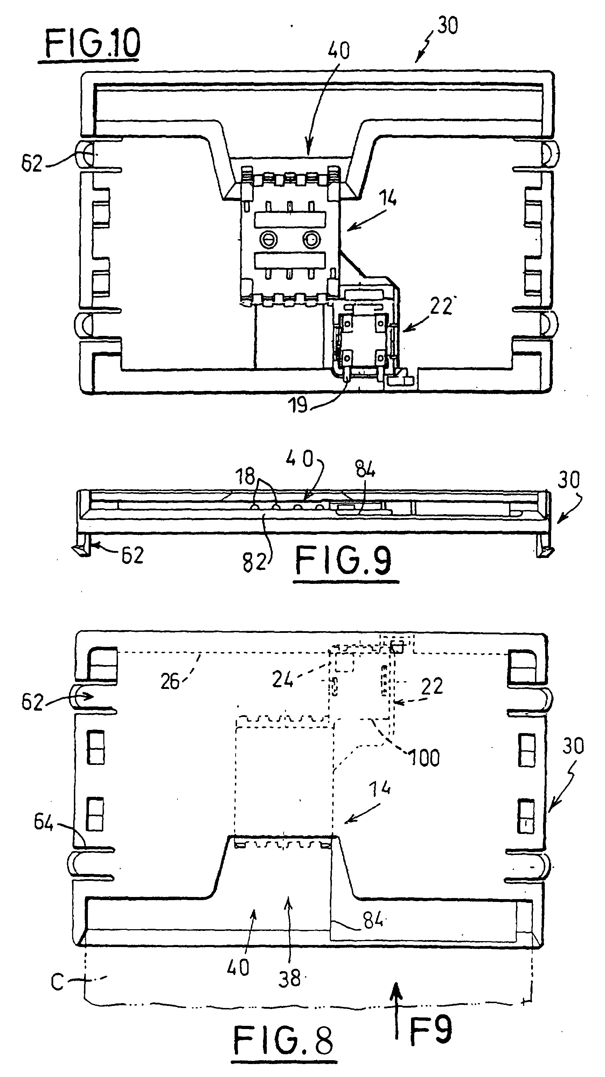

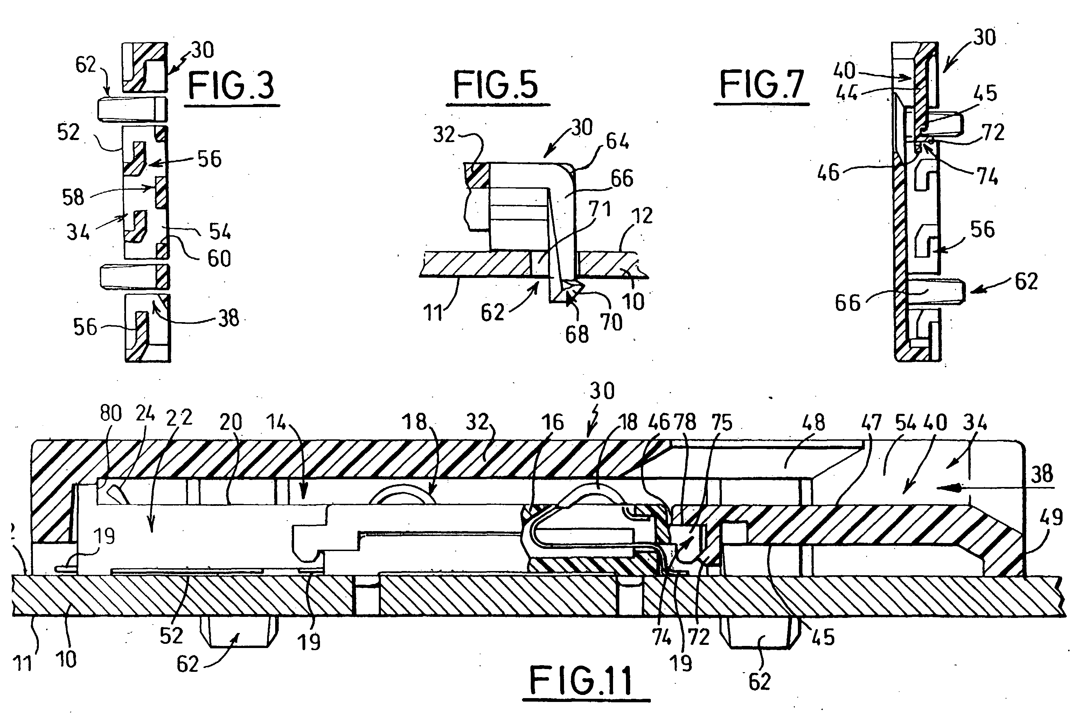

Comme on peut le voir en se reportant aux figures 8 à 11, le capot 30 est conçu pour chevaucher le connecteur 14 préalablement monté sur la carte à circuit imprimé 10, c'est-à-dire que l'altitude, ou cote verticale, de la partie centrale 44 du plancher 40 est telle que sa face supérieure 47 (voir figure 11) s'étend en affleurement de la face supérieure de contact 20 du connecteur 14.

Comme on peut le voir également sur la figure 11, le bord arrière 46 de la partie centrale 44 du plancher 40 s'étend verticalement au-dessus d'une portion en vis-à-vis 75 du corps 16 du connecteur 14 qui est délimité par un décrochement de forme complémentaire 78.

Ainsi, en se reportant à la figure 11, on constate qu'une carte C peut être introduite dans le capot 30 qui comporte des moyens pour son guidage latéral, la fente d'introduction 38 étant délimitée verticalement vers le bas par la face supérieure 47 de la partie centrale 44 du plancher 40 qui se prolonge, sans décrochement, par la face supérieure 20 du corps 16 du connecteur 14.

Dans le cas où, comme cela est illustré sur les figures, le connecteur 14 comporte un commutateur intégré 22, ce dernier comporte une patte verticale 80 qui détermine le positionnement longitudinal de la carte par rapport au commutateur et au connecteur.

En position montée du capot 30, le commutateur est maintenu verticalement par rapport à la face intérieure du plafond 32 dans une position précise grâce à un bec 102 illustré aux figures 6 et 12 qui vient s'emboîter élastiquement sur une partie correspondante du bord du commutateur.

Si le commutateur est réalisé sous la forme d'un autre composant discret rapporté sur la carte à circuit imprimé 10, le capot 30 peut délimiter la position longitudinale de lecture-écriture de la carte, le bord transversal avant 26 de cette dernière venant par exemple en butée contre la face interne 37 de son fond arrière 36.

Le connecteur étant monté sur la carte 10 préalablement à la fixation du capot 30, cette dernière opération, décrite précédemment, s'effectue par emboîtement de la partie correspondante 75 du corps 16 du connecteur 14 dans le logement 74 par déformation élastique du bec 72, cet encliquetage se produisant simultanément avec l'encliquetage des crochets 68.

Afin de faciliter l'introduction de la carte, le bord avant de la fente 38 peut comporter un chanfrein 82 formé tout autour de la fente 38, et notamment sur le bord avant du plancher 40 et sur le bord avant du plafond 32.

Dans le cas où la carte C comporte des gravures en relief, il est prévu un dégagement ou cavité 84 dans la face supérieure 47 du plancher 40 pour le passage des gravures en relief de la carte C, ainsi qu'un décrochement 100 dans la face supérieure 20 du connecteur. Un évidement correspondant est prévu dans la face en vis-à-vis du plafond 32.

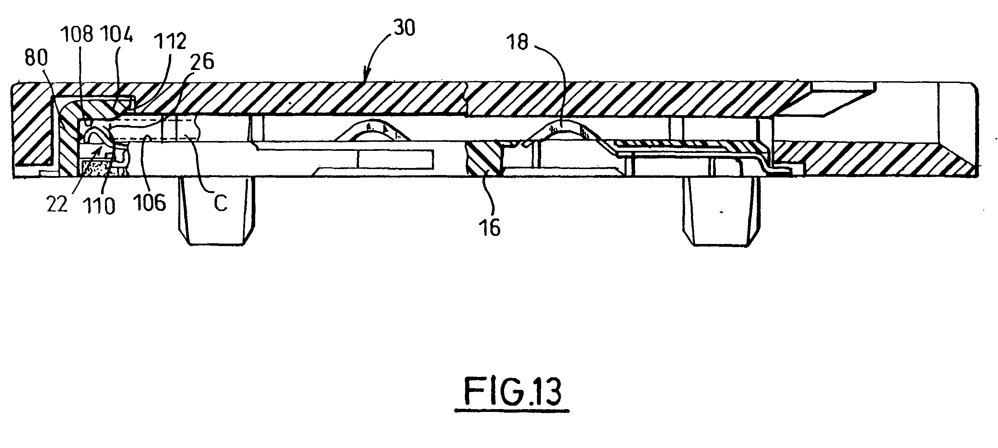

Dans la variante de réalisation illustrée à la figure 13, le connecteur 14 est d'épaisseur réduite et il est constitué par un corps 16 porte-contacts 18 en une seule pièce, la hauteur du capot 30 étant réduite dans la même proportion.

On a également représenté à la partie gauche une patte de positionnement de la carte en forme de toit 104 réalisé venu de matière par moulage avec le corps du commutateur qui s'étend partiellement au-dessus de la face supérieure 104 du commutateur et dont la face inférieure 108 délimite verticalement avec cette dernière un logement 110 qui reçoit la carte à puce C en fin d'introduction, le bord avant 26 étant guidé dans le logement 110 par un chanfrein 112 de façon à garantir un déclenchement sûr du commutateur.

Le toit 104 peut bien entendu être utilisé avec un connecteur plus épais du type décrit précédemment.

## Revendications

1. Agencement pour le raccordement d'une carte (C) à circuit(s) intégré(s) à contact dans un dispositif de lecture-écriture dans lequel la carte (C) est introduite selon une direction (I) sensiblement parallèle aux plages conductrices de la carte, ledit agencement étant du type comportant un connecteur électrique (14) fixé sur un support (10) du dispositif, notamment sur une carte à circuit imprimé, et dont une facé plane supérieure de contact (20) porte des éléments de contact (18) destinés à coopérer avec les plages de la carte (C) lorsque cette dernière est en position de lecture-écriture, et du type comportant des moyens de guidage de la carte par rapport au connecteur (12) lors de son introduction dans le dispositif, **caractérisé en ce que** les moyens de guidage sont réalisés sous la forme d'un capot (30) qui est fixé sur le support (10), au-dessus du connecteur (14), ledit capot comportant un plancher (40, 44) de guidage de la carte (C) dont la face supérieure (47) s'étend sensiblement en affleurement avec la face supérieure (20) du connecteur (14).

2. Agencement selon la revendication 1, **caractérisé en ce que** le capot comporte deux glissières latérales (56, 58) de guidage de la carte (C) qui s'étendent depuis l'extrémité avant (42) du capot (30) qui délimite une fente (38) d'introduction de la carte (C).

3. Agencement selon la revendication 2, **caractérisé en ce que** la fente d'introduction (38) est délimitée en partie par le plancher de guidage (40, 44).

4. Agencement selon l'une des revendications 1 ou 3, **caractérisé en ce que** le plancher de guidage (40, 44) se termine par un bord transversal arrière (46) qui chevauche au moins en partie une portion en vis-à-vis (78) du connecteur (14).

5. Agencement selon la revendication 4, **caractérisé en ce que** ladite portion du connecteur est une patte transversale (75) qui, lors de la mise en place du capot (30) sur le support (10) préalablement équipé du connecteur (14), est emboîtée élastiquement dans un logement (74) délimité par le bord transversal arrière (46) du plancher (44) et par un bec en vis-à-vis (72) du capot (30).

6. Agencement selon l'une quelconque des revendications précédentes, **caractérisé en ce que** le capot (30) comporte un plafond (32) qui s'étend au moins en partie au-dessus du connecteur (14).

7. Agencement selon l'une quelconque des revendications précédentes, **caractérisé en ce que** le capot (30) comporte des moyens (62) pour sa fixation par emboîtement élastique sur le support (10, 71).

8. Agencement selon la revendication 7, **caractérisé en ce que** le capot (30) comporte des pieds (32) de fixation dont chacun comporte à son extrémité libre un crochet (68) reçu dans un trou complémentaire (71) du support.

9. Agencement selon la revendication 1, **caractérisé en ce que** la face supérieure (47) du plancher (40, 44) du capot (30) comporte un dégagement (84) pour le passage de gravures en relief de la carte (C).

## Patentansprüche

1. Anordnung für den Anschluß einer Chipkarte (C) mit Kontakten in einer Lese- und Schreibvorrichtung, in welche die Karte (C) in im Wesentlichen paralleler Richtung (I) zu den Leiterbereichen der Karte eingesetzt wird, wobei die genannte Anordnung einen elektrischen Steckverbinder (14) aufweist, der an einer Auflagefläche (10) der Vorrichtung und insbesondere auf einer Leiterplatte befestigt ist, wobei sich auf einer oben liegenden, ebenen Kontaktfläche (20) Kontaktelemente (18) befinden, die dazu bestimmt sind, mit den Leiterbereichen der Karte (C) zusammenzuarbeiten, wenn sich die Karte in der Lese- und Schreibposition befindet, und die Vorrichtung außerdem Führungsmittel für die Karte im Verhältnis zum Steckverbinder (12) zum Einsetzen der Karte in die Vorrichtung besitzt, **dadurch gekennzeichnet, daß** die Führungsmittel die Form einer Kappe (30) besitzen, die auf der Auflagefläche (10) über dem Steckverbinder (14) befestigt ist, und die besagte Kappe einen Führungsboden (40, 44) für die Karte (C) aufweist, dessen Oberseite (47) im Wesentlichen mit der Oberseite (20) des Steckverbinders (14) auf einer Höhe liegt.

2. Anordnung gemäß Anspruch 1, **dadurch gekennzeichnet, daß** die Kappe zwei seitliche Schienen (56, 58) für die Führung der Karte (C) aufweist, die sich vom vorderen Ende (42) der Kappe (30) erstrecken, welche einen Schlitz (38) für das Einsetzen der Karte (C) begrenzt.

3. Anordnung gemäß Anspruch 2, **dadurch gekennzeichnet, daß** der Einführungsschlitz (38) teilweise durch den Führungsboden (40, 44) begrenzt wird.

4. Anordnung gemäß einem der Ansprüche 1 oder 3, **dadurch gekennzeichnet, daß** der Führungsboden (40, 44) mit einem hinteren Querrand (46) abschließt, der zumindest teilweise einen Teilbereich (78) gegenüber dem Steckverbinder (14) überlappt.

5. Anordnung gemäß Anspruch 4, **dadurch gekennzeichnet, daß** es sich bei dem besagten Teil des Steckverbinders um eine Querlasche (75) handelt, die bei der Montage der Kappe (30) an der Auflagefläche (10), welche zuvor mit dem Steckverbinder (14) ausgestattet wurde, elastisch in einer Aussparung (74) eingerastet wurde, welche durch den hinteren Querrand (46) des Bodens (44) und durch einen Vorsprung gegenüber (72) der Kappe (30) begrenzt wird.

6. Anordnung gemäß einem beliebigen der vorhergehenden Ansprüche, **dadurch gekennzeichnet, daß** die Kappe (30) eine Decke (32) aufweist, die sich zumindest zum Teil über den Steckverbinder (14) erstreckt.

7. Anordnung gemäß einem beliebigen der vorhergehenden Ansprüche, **dadurch gekennzeichnet, daß** die Kappe (30) Mittel (62) für ihre Befestigung durch elastisches Einrasten an der Auflagefläche (10, 71) aufweist.

8. Anordnung gemäß Anspruch 7, **dadurch gekennzeichnet, daß** die Kappe (30) Steckfüße (32) aufweist, von denen jeder an seinem freien Ende einen Haken (68) aufweist, der in eine komplementäre Bohrung (71) in der Auflagefläche eingesetzt wird.

9. Anordnung gemäß Anspruch 1, **dadurch gekennzeichnet, daß** die Oberseite (47) des Bodens (40, 44) der Kappe (30) eine Aussparung (84) für die Durchführung von Reliefgravierungen der Karte (C) aufweist.

## Claims

1. Arrangement for the connection of a contact-type integrated circuit card (C) in a read-write device in which the card (C) is inserted in a direction (I) substantially parallel to the conducting pads on the card, said arrangement being of the type including an electrical connector (14) fixed to a support (10) of the device, especially to a printed-circuit board, an one upper plane contact face (20) of which electrical connector carries contact elements (18) which are intended to act in conjunction with the pads on the card (C) when the latter is in the read-write position, and of the type including means for guiding the card with respect to the connector (14), during its insertion into the device, **characterized in that** the guiding means are produced in the form of a cover (30) which is fixed to the support (10), above the connector (14), said cover comprising a floor (40, 44) for guiding the card (C) whose upper face (47) extends substantially flush with the upper face (20) of the connector (14).

2. Arrangement according to claim 1, **characterized in that** the cover includes two lateral runners (56, 58) for guiding the card (C) which extend from the front end (42) of the cover (30) which delimits an insertion slot (38) for the card (C).

3. Arrangement according to claim 2, **characterized in that** the insertion slot (38) is delimited in part by the guide floor (40, 44).

4. Arrangement according to claim 1 or 3, **characterized in that** the guide floor (40, 44) terminates in a rear transverse edge (46) which at least partly overlaps a facing segment (78) of the connector (14).

5. Arrangement according to claim 4, **characterized in that** the said segment of the connector is a transverse lug (75) which, when the cover (30) is being placed on the support (10) previously equipped with the connector (14), engages elastically in a housing (74) delimited by the rear transverse edge (46) of the floor (44) and by a facing catch (72) of the cover (30).

6. Arrangement according to any one of the preceding claims, **characterized in that** the cover (30) includes a ceiling (32) which extends at least in part above the connector (14).

7. Arrangement according to any one of the preceding claims, **characterized in that** the cover (30) includes means (62) for fixing it by elastic engagement to the support (10, 71).

8. Arrangement according to claim 7, **characterized in that** the cover (30) includes fixing legs (32) each of which includes at its free end a hook (68) received in a complementary hole (71) in the support.

9. Arrangement according to claim 1, **characterized in that** the upper face (47) of the floor (40, 44) of the cover (30) includes a recess (84) for the passage of engravings in relief on the card (C).
